# EUROPÄISCHE PATENTSCHRIFT

(11) **EP 3 916 198 B1**
(45) Veröffentlichungstag und Bekanntmachung des Hinweises auf die Patenterteilung: **07.10.2026**
(21) Anmeldenummer: 21168894.0
(22) Anmeldetag: 02.02.2016
(51) Int. Cl.: E21B 47/06, E21B 47/047, E21B 43/12

(54) **VERFAHREN UND ANORDNUNG ZUM BETRIEB EINER FÖRDERUNG IN EINEM BOHRLOCH**
METHOD AND ARRANGEMENT FOR OPERATING A CONVEYOR IN A HOLE
PROCÉDÉ ET AGENCEMENT DE FONCTIONNEMENT D'UN TRANSPORT DANS UN TROU DE FORAGE

(30) Priorität: 03.02.2015 DE 102015001218; 08.04.2015 DE 102015105267
(43) Veröffentlichungstag der Anmeldung: 01.12.2021
(60) Teilanmeldung: 22180126.9 / 4 083 373
(62) Dokumentnummer(n) der früheren Anmeldung(en) nach Art. 76 EPÜ: 16702916.4 / 3 253 947
(73) Patentinhaber: TDE Digital GmbH, 8700 Leoben (AT)
(72) Erfinder: Burgstaller, Christian, 4923 Lohnsburg (AT)
(74) Vertreter: Beer & Partner Patentanwälte KG

(56) Entgegenhaltungen:
- EP-B1- 2 169 179
- US-A- 3 965 983
- US-A- 5 941 305
- US-A- 6 041 856
- US-A1- 2011 228 637

## Beschreibung

Die Erfindung betrifft eine Anordnung zum Betrieb einer Förderung in einem Bohrloch. Sie betrifft außerdem ein Verfahren zum Betrieb einer Förderung eines Fluids in einem Bohrloch, bei welchem in dem Bohrloch bei Tiefbohrungen die Lage einer Spiegelteufe erfasst wird, wobei eine Druckmessung des Druckes am Kopf des Bohrloches vorgenommen wird, aus dem gemessenen Druck am Kopf des Bohrloches und der ermittelten Lage der Spiegelteufe der Druck in der Flüssigkeit unterhalb der Spiegelteufe im Bohrloch bestimmt wird, und die Bestimmung dieses Drucks zur Regelung der Leistung einer Fördereinrichtung für die zu fördernde Flüssigkeit eingesetzt wird, wobei die Leistung der Fördereinrichtung so geregelt wird, dass konstante Zuflussraten und/oder eine konstante Lage der Spiegelteufe herrschen.

Bohrlöcher dienen insbesondere zum Erschließen und Fördern von Rohöl oder Erdgas aus unterirdischen Lagerstätten. Diese erstrecken sich in horizontaler und vertikaler Richtung häufig über einen größeren Flächenbereich, so dass eine Vielzahl von Bohrlöchern für jede einzelne Lagerstätte eingesetzt wird, um das Rohöl oder das Erdgas aus den Lagerstätten zu gewinnen.

Im tiefsten Bereich des Bohrlochs befindet sich das gewünschte Medium, also insbesondere Rohöl oder Erdgas. Dieses Medium wird mittels Pumpen oder anderer Fördereinrichtungen gefördert. Für das so entnommene Medium strömen von den Seiten und von unten weitere Rohöl- oder Erdgasmengen nach. Die Oberfläche der Fluide wird als Spiegelteufe bezeichnet.

Für den Betrieb der Förderung in einem Bohrloch sind eine Reihe von Randbedingungen von Interesse, insbesondere die genaue Lage der Spiegelteufe im Bohrloch. Diese befindet sich einige hundert oder häufiger mehrere tausend Meter tief und ist daher nur schwierig zu bestimmen, da sich oberhalb der Flüssigkeit kein ideales Gas, sondern eine recht komplizierte und auch wechselnde Mischung befindet.

Eine Regelvorrichtung, die sich mit der Spiegelteufe beschäftigt, wird bereits in der US-A-3,965,983 beschrieben. Eine Schallwelle wird im Bohrloch fokussiert, die auf die Fluidoberfläche trifft und wieder zu einem Empfänger benachbart zum Bohrlochkopf zurückläuft. Aus der Zeitdauer der Welle wird eine ungefähre relative Position der Spiegelteufe relativ zur Pumpe ermittelt. Über die ungefähre relative Position der Spiegelteufe relativ zur Pumpe hinaus werden keine weiteren Daten für das Bohrloch ermittelt.

Ein weiterer Vorschlag ist aus der US 2006/0102346 A 1 bekannt. Mittels eines Druckimpulses, der in der geförderten Flüssigkeit erzeugt und transportiert wird, wird ein an Gegenständen reflektierter Impuls innerhalb der Bohrung lokalisiert. Als Förderelement wird ein Kolben eingesetzt, der die detektierten Druckimpulse und reflektierten Druckimpulse zu einem Signal umwandelt, um nähere Angaben über den Zustand des Bohrlochs zu erhalten. Die US 2002/084071 A 1 betrifft ebenfalls ein Messsystem zur Bestimmung der Position eines Plungers innerhalb eines Förderstrangs.

In der Fachwelt werden solche Konzepte als tubing plunger bezeichnet. Durch das Öffnen und Schließen von Zugängen in der Förderleitung werden Druckdifferenzen ober- und unterhalb des Kolbens erzeugt bzw. ausgeglichen und mittels Schwerkraft der Kolben bewegt.

Derartige Konzepte sind in erster Linie bei der Gasförderung von stark verwässerten Erdgasfördersonden einsetzbar.

Aus der EP 2 169 179 B 1 und der US-A-8,902, 704 sind ein Verfahren und eine Vorrichtung zur Erkennung der Lage der Spiegelteufe in einem Bohrloch bekannt. Diese Vorrichtungen und das mit ihnen betriebene Verfahren werden mit großem Erfolg vielfach eingesetzt. Bei einem Absinken der Spiegelteufe unter ein bestimmtes Maß hinweg würde nämlich das Bohrloch trocken fallen, was natürlich nicht erwünscht ist. Andererseits ist erwünscht, eine möglichst große Menge an Rohöl aus einem Bohrloch entnehmen zu können. Dadurch, dass jetzt die Spiegelteufe bestimmt werden kann, ist hier eine deutliche Verbesserung möglich.

Aus der US 5,200,894 A und der US 5,285,388 A sind Auswertungsverfahren akustischer Signale zur Bestimmung der Spiegelteufe bekannt, die mit der Auswertung von Signalen nach früherer Spiegelmesstechnologie arbeiten.

Aus der US 5,941,305 A und der US 6,041,856 A ist bekannt, eine sich dynamisch verändernde Spiegelteufe zu ermitteln, um daraus auf eine Föderleistung der Förderpumpe zu schließen. Die Spiegelteufe wird anhand einer mit einer Kraftmesszelle ermittelten Gewichtskraft am Pumpenstrang, anhand gemessener Drücke im Casing und am Bohrlochkopf, sowie aus anderen fixen Eingabewerten des Bohrlochs berechnet. Damit kann auch der Saugdruck der Förderpumpe ermittelt werden.

Die verbesserte Kenntnis der Lage der Spiegelteufe in einem Bohrloch ist auch deshalb so wertvoll, weil die Förderstätten von Rohöl oder Erdgas vielfach in klimatisch oder aus anderen Gründen ungünstigen Regionen liegen. Im Regelfall gibt es keine Bedienungspersonen in der Nähe der Förderstätte, also des Bohrlochs, und es ist häufig erwünscht, die Bohrlöcher über einen möglichst langen Zeitraum auch automatisch arbeiten zu lassen. Eine Überprüfung der Situation am Bohrloch findet daher nur in größeren Zeitabständen statt. Das gleiche gilt für eine neue Einstellung oder Kontrolle am Bohrloch.

Jeder Besuch am Bohrloch ist daher mit relativ hohen Kosten und Aufwendungen für Anreise und Transport verbunden und es ist erwünscht, die Automatisierung nach Möglichkeit weiter fortzusetzen.

Aufgabe der Erfindung ist es daher, eine Anordnung und ein Verfahren vorzuschlagen, die eine weitere Möglichkeit bieten, den Betrieb einer Erdöl- oder Erdgasförderung in einem Bohrloch weiter zu verbessern oder zu automatisieren.

Die Aufgabe wird durch die Merkmale von Anspruch 1 gelöst. Die Lösung der Aufgabe beinhaltet Verfahrensschritte konzipiert so, dass eine Druckmessung des Druckes am Kopf des Bohrloches vorgenommen wird, dass aus dem gemessenen Druck am Kopf des Bohrloches und der ermittelten Lage der Spiegelteufe der Druck in der Flüssigkeit unterhalb der Spiegelteufe im Bohrloch bestimmt wird, und dass die Bestimmung dieses Drucks zur Regelung der Leistung einer Fördereinrichtung für die zu fördernde Flüssigkeit eingesetzt wird.

Eine weitere Lösung der Aufgabe stellt eine Anordnung vor, wobei diese Anordnung so konzipiert wird, dass eine Druckmesseinrichtung oberhalb der Erdoberfläche zur Messung des Druckes im Kopf des Bohrloches vorgesehen ist, dass eine Vorrichtung zur Erkennung der Lage der Spiegelteufe vorgesehen ist, dass eine Auswerteeinrichtung vorgesehen ist, der die Werte der Druckmesseinrichtung und der Vorrichtung zur Erkennung der Lage der Spiegelteufe zugeführt werden, und dass die Auswerteeinrichtung einer Steuerung der Fördereinrichtung aus den Eingabedaten ermittelte Werte zuführt.

Die Erfindung macht von einem Gedanken Gebrauch, der aus praktischen Gründen bisher noch nicht für den Betrieb einer Förderung in einem Bohrloch herangezogen worden ist. Dieser weitere interessante Aspekt ist der Druck, der sich in der Flüssigkeit im Bohrloch aufbaut. Dieser Druck ist jedoch bisher in der Praxis nicht bestimmbar.

Zwar besteht auch bisher schon die Möglichkeit, den Druck im Kopf des Bohrloches oberhalb der Erdoberfläche zu bestimmen, dieser Druck ist jedoch keinesfalls gleich dem Druck in einer Flüssigkeit unten im Bohrloch.

Das Einbringen von geeigneten Sensoren zur Messung des Druckes in ein viele hundert oder tausend Meter tiefes Bohrloch ist jedoch jedenfalls mit ganz erheblichen Kosten verbunden. Darüber hinaus würde die Vornahme einer solchen Druckmessung durch das Einbringen eines Sensors den Ausbau der Pumpe notwendig machen und die Förderung stören, die also dazu unterbrochen werden müsste. Das aber würde wiederum genau die Werte verändern, die gerade bestimmt werden sollen, da sich die äußeren Randbedingen ändern. Darüber hinaus wäre dies ein nicht automatisierbarer und somit aufwändiger Vorgang.

Ebenso ist das Einbringen von Sensoren etwa beim Bohren des Bohrloches sehr erschwert, da das Bohren behindert wird. Bereits eine Funktionsüberprüfung oder gar Reparatur derartiger Drucksensoren wäre darüber hinaus sehr problematisch.

Erfindungsgemäß wird jedoch trotz dieser ganz erheblichen und zu recht bestehenden Vorurteile gegenüber einer Druckbestimmung der Flüssigkeit im Bohrloch gerade eine Druckbestimmung jetzt genutzt, um eine weitere Automatisierung beim Betrieb einer Förderung von Erdöl oder Erdgas in einem Bohrloch zu ermöglichen. Diese Druckbestimmung erfolgt allerdings erfindungsgemäß ganz anders, als dies in den oben erwähnten unpraktikablen theoretischen Überlegungen eines Fachmanns vielleicht für denkbar gehalten wird.

Gerade die jetzt bestehende neue Möglichkeit, die exakte Lage der Spiegelteufe für die Flüssigkeit im Bohrloch festzustellen, gibt nämlich durch einige zusätzliche Überlegungen auch eine Chance, einen Wert für den Druck der Flüssigkeit unterhalb der Spiegelteufe im Bohrloch zu bestimmen. Diese Bestimmung kann in Echtzeit erfolgen und die Bestimmung des Druckes kann dann auch dazu genutzt werden, in einer Auswertung die Daten nicht nur mitzuteilen, sondern auch gleich für die Steuerung der Pumpe einzusetzen.

Dabei ist es ein weiterer großer Vorteil, dass zu den Auswerteeinheiten, die für die Bestimmung der Lage der Spiegelteufe einzusetzen sind, diese zusätzlichen Erkenntnisse über den Druck innerhalb der Flüssigkeit nicht zu übergroßen zusätzlichen Kosten führen, sondern sich in praktischer und zuverlässiger Form als ergänzendes Aggregat einsetzen lassen.

Da die gesamten zusätzlichen Elemente und Geräte oberhalb der Erdoberfläche eingebaut werden können und gerade keine Drucksensoren mehr im Bohrloch selbst erfordern, ist auch eine etwaige Reparatur oder Wartung sehr einfach und kann gleich mit den Wartungen der Elemente der Vorrichtung zur Bestimmung der Lage der Spiegelteufe zusammen durchgeführt werden. Selbst ein Ersatz etwaiger Elemente ist damit vergleichsweise kostengünstig.

Es ergibt sich ein optimiertes System zur Durchführung automatischer Einstellungen bei Förderanlagen, insbesondere von Pumpen in Bohrlöchern für die Erdölförderung. Das optimierte System ist gestützt auf ein neues Verfahren zur Bestimmung des Drucks im Inneren eines Bohrloches aus den Bestimmungen für die Lage der Spiegelteufe und den Messungen für den Druck im Kopf des Bohrloches oberhalb des Erdbodens.

Eine entsprechende Anlage für ein solches optimiertes System weist eine Vorrichtung zur Bestimmung der Lage der Spiegelteufe und zusätzlich eine Druckmesseinrichtung für die kontinuierliche Messung des Druckes im Kopf des Bohrloches auf. Vorzugsweise wird eine variable Geschwindigkeitssteuerung für die Durchflussgeschwindigkeit der Pumpe eingesetzt. Bevorzugt werden dabei elektrische Tauchkreiselpumpen oder Gestängetiefpumpen verwendet.

Bei der Bestimmung des Druckes im Bohrloch sind zwei unterschiedliche Situationen in Betracht zu ziehen. Es handelt sich zum Einen um einen stabilen Zustand und zum Anderen um einen Übergangszustand. Während des Betriebes entsteht der stabile Zustand oder auch Gleichgewichtszustand oder Dauerzustand bei einem Betrieb in Pumpanlagen dann, wenn ein konstanter Flüssigkeitsspiegel, also eine konstante Spiegelteufe, aufrechterhalten wird, während Flüssigkeiten und/oder Gase bei nahezu konstanten Förderraten gefördert werden.

Wird dagegen die Pumpe abgeschaltet, so beginnt eine Aufbauphase für den Druck und Übergangszustände treten ein. Bei diesen Übergangszuständen ist die Spiegelteufe bzw. der Flüssigkeitsspiegel nicht mehr konstant und steigt an, und zwar insbesondere bei Tiefbohrungen in einem Ringraum, der das eigentliche Förderrohr umgibt. Da der Druck am Bohrlochzuflusspunkt ansteigt, weil der Gegendruck oder Rückdruck in dem Ringraum mit der ansteigenden Flüssigkeitssäule ebenfalls ansteigt, nimmt der Flüssigkeitszufluss in das Bohrloch immer weiter ab bis ein statisches Gleichgewicht erreicht ist und die Spiegelteufe stabilisiert.

Erfindungsgemäß wird nun bevorzugt ein numerisches Verfahren eingesetzt, um den Druck im Bohrloch bzw. den Druck in der Eintrittstiefe in einem stabilen Zustand und in einem Übergangszustand aus den Messungen der Spiegelteufe und den Messungen des Druckes im Kopf des Bohrloches zu berechnen. Zusätzliche Eingangsparameter in die Berechnung sind die Zuflussraten an Flüssigkeit, also insbesondere an Rohöl und Wasser, die Zuflussrate an Gas, die Neigung des Bohrloches längs der Bohrung, die Innendurchmesser und Außendurchmesser des Ringraumes und die Flüssigkeitseigenschaften. Letzteres sind u. a. die Wasser-, Öl- und Gasdichten als Funktion des Druckes und die Oberflächenspannungen zwischen Öl und Gas. Diese Daten sind aber bekannt bzw. können bei Langzeitbeobachtungen festgestellt werden, beispielsweise aus der regelmäßig förderbaren Rohölmenge je Zeiteinheit.

Unter den Bedingungen eines stabilen Zustandes mit konstanten Förderraten, konstanter Spiegelteufe und konstantem Druck im Kopf des Bohrloches wird der Druck der Flüssigkeit im Bohrloch bestimmt aus Messungen des Druckes im Bohrlochkopf und der Lage der Spiegelteufe und die ermittelten durchschnittlichen Druckgradienten in den Flüssigkeits- und Gassäulen. Die durchschnittlichen Druckgradienten der Flüssigkeits- und Gassäulen werden aus Standardbeziehungen erhalten, die in der Ölindustrie angewandt werden, beispielsweise aus den so genannten Duns und Ros Beziehungen. Eingangsparameter für die Beziehungen der Druckgradienten sind die Strömungsgeschwindigkeiten, das Verhältnis von Gas zu Öl (auch als Gas Oil Ratio, GOR bezeichnet) und die Flüssigkeitseigenschaften, also die Dichte in Abhängigkeit vom Druck.

Dieses Verfahren wird für jede einzelne Messung der Spiegelteufe in den Bedingungen eines stabilen Zustandes durchgeführt.

Die grundsätzliche Komplexität beim Bestimmen des Druckes im Inneren des Bohrloches von Tiefbohrungen bei Übergangsbedingungen entsteht dann, wenn in einer gashaltigen Flüssigkeitssäule freies Gas aufsteigt. Der Vorgang des Aufsteigens von Gasblasen durch eine Flüssigkeitssäule hat einen wichtigen Effekt auf den Druckgradienten. Der Vorgang des Aufsteigens von Gasblasen durch eine Ölflüssigkeitssäule ist sehr komplex und das Modell nicht einfach, aber bekannt. Die Flüssigkeiten betreten das Bohrloch und trennen sich aufgrund ihrer Dichte. Freie Gasblasen wandern aufwärts und lassen die schweren Komponenten hinter sich. Es entsteht Öl im Gleichgewicht und gelöstes Gas, wobei freies Gas hindurchwandert.

Übergangszustände entstehen durch das Abschalten der Pumpen. Dadurch wird es dem Ringraum um den eigentlichen, mit Rohöl gefüllten Förderstrang erlaubt, sich mit Flüssigkeit zu füllen. Die ansteigende Spiegelteufe kann dann bevorzugt überwacht werden mithilfe einer Vorrichtung zur Bestimmung der Lage der Spiegelteufe. Derartige Vorrichtungen können beispielsweise mit einem Intervall von einer Minute arbeiten. Der Druck im Bohrlochkopf und die Veränderung der Lage der Spiegelteufe werden als Funktion der Zeit aufzeichnet.

Die Strömung der Gasblasen durch die Ölflüssigkeitssäulen hat einen erheblichen Effekt auf den Öldruckgradienten im Ringraum. Um die Druckveränderungen in der gashaltigen Ölflüssigkeitssäule festzustellen wird eine Annahme über den Gasblasenanteil in der Ölsäule getroffen. Der Gasblasenanteil wird auch als Gas Void Fraction f_{g} bezeichnet. Dabei wird eine Beziehung eingesetzt, die die so genannte Leerrohrgeschwindigkeit v_{sg} (Superficial gas velocity) zu dem Gasblasenanteil betrifft, siehe die folgende Gleichung 5. Die Konstanten C, D und E sind dabei empirisch ermittelte Werte (und liegen im Bereich von 0,2 bis 2,0).

Es sollte betont werden, dass bei steigendem Druck die Menge an Öl und Gas, welche in das Bohrloch eintritt, aufgrund des zunehmendes Gegendrucks innerhalb des Ringraums abnimmt. Daher nimmt das Gas, welches in den ringförmigen Gasraum aus der Flüssigkeitssäule hineinströmt, ab, wenn weniger Gas das Bohrloch betritt und weniger gelöstes Gas wird aus der Ölsäule freigesetzt als Ergebnis, wenn der Druck ansteigt.

Um die Leerrohrgeschwindigkeit des Gases zu bestimmen wird eine Annahme über die Flüssigkeit getroffen, welche in das Bohrloch nach dem Abschalten eintritt und wird erhalten durch den Einsatz des Konzeptes des Produktivitätsindexes nach der folgenden Gleichung 1 (Productivity Index, PI).

Weiter wird das Konzept der Beziehung aus der Zustromleistung (Inflow Performance Relationship, IPR) eingesetzt. Eine häufig verwendete IPR-Beziehung ist die so genannte Fetkovich-Gleichung. Diese wird angewandt, um eine Annahme über die Zuflussrate nach Abstellung der Pumpe zu jeder Messung der Lage der Spiegelteufe zu treffen, siehe die folgende Gleichung 3. Dabei ist q_{MAX} die Zuflussrate bei einem "Zero Bottom Hole Pressure", also dem absoluten offenen Strömungspotenzial nach Gleichung 2. Darüber hinaus kann die Leerrohrgasgeschwindigkeit nach Gleichung 4 und der Gasblasenanteil nach Gleichung 5 berechnet werden, unter Verwendung einer neuen Zuflussrate zu jeder Messung der Spiegelteufe und des Druckes im Kopf des Bohrloches. Die Gleichungen lauten: $PI = \frac{q}{{P}_{r} - {P}_{wf}}$ (1) ${q}_{MAX} = PI * {P}_{r}$ (2) $q = {q}_{MAX} * \left[1-{\left(\frac{{P}_{wf}}{{P}_{r}}\right)}^{2}\right]$ (3) ${ν}_{sg} = \frac{{q}_{MAX} * \left[1-{\left(\frac{{P}_{wf}}{{P}_{r}}\right)}^{2}\right] * GOR * {B}_{g}}{{A}_{F}}$ (4) ${f}_{g} = \frac{{ν}_{sg}}{\left(C+D*\frac{{TU}_{OD}}{{CA}_{ID}}\right) * {ν}_{sg} + E * {\left[g*σ*\frac{\left({ρ}_{o}-{ρ}_{g}\right)}{{{ρ}_{o}}^{2}}\right]}^{0.25}}$ (5)

Dabei sind ρₒ und ρ_{g} die druckabhängigen Öl- und Gasdichten.

Der Gasblasenanteil wird danach verwendet, um den durchschnittlichen Druckgradienten in der Flüssigkeitssäule zu bestimmen. Schließlich wird der Druck am Fuß des Bohrloches bzw. an der Bohrlochsohle zu jedem Zeitschritt bestimmt, das bedeutet zu jeder Messung der Lage der Spiegelteufe. Man erhält ihn aus dem Druck im Kopf des Bohrloches und den Druckgradienten in den Gas- und Flüssigkeitssäulen. Die Reihe von Druckbestimmungen an der Bohrlochsohle ergeben eine Kurve, die den Aufbau des Druckes wiedergibt.

Der beschriebene Vorgang wird für jede einzelne Bestimmung der Lage der Spiegelteufe bei Übergangsbedingungen durchgeführt.

Das erfindungsgemäße Verfahren unter Einsatz der Bestimmung des Druckes in der Flüssigkeit im Bohrloch bzw. an der Bohrlochsohle kann in verschiedenen Anwendungsfällen eingesetzt werden, um den Betrieb einer Förderanlage zu verbessern.

So entsteht bei der Förderung von Rohöl ein Problem dann, wenn das Bohrloch unterhalb des Kochpunktdruckes (auch als Druck beim Entgasungsbeginn oder Gasentlösungspunkt bezeichnet) betrieben wird. Dies führt nämlich zum Entstehen von Blasen von freigesetztem Gas, das in der Gesteinsformation bzw. Öllagerstätte auftritt. Die Gasblasen können die Porenhälse blockieren und so die Durchlässigkeit für Öl (relative Ölpermeabilität) herabsetzen. Dies führt zu einer reduzierten Förderrate und begrenzt die Gewinnung von Rohöl. Dieser Effekt kann irreversibel sein. Es wäre daher sehr wünschenswert, wenn man das Eintreten dieser Situation soweit wie möglich vermeiden könnte. Die kontinuierliche Bestimmung des Fließdruckes an der Bohrlochsohle und das automatische Halten des Fließdruckes an der Bohrlochsohle oberhalb des erwähnten Kochpunktdruckes ist daher von sehr großem Vorteil. Dies wird möglich durch die Regelung der Lage der Spiegelteufe. Auf diese Weise erhält man eine Lösung des Problems, die beschriebenen Nachteile können vermieden werden.

Die Lage der Spiegelteufe kann dabei durch die Einstellung der Pumpleistung vorgenommen werden.

Ein weiterer Einsatzfall ist die Optimierung von Laufzeiten und Abschaltzeiten von Pumpen in Bohrlöchern, die bei intermittierender Förderung arbeiten.

Ölquellen, die bei niedrigen Förderraten arbeiten, beispielsweise in Gesteinsformationen mit einer geringen Durchlässigkeit, werden häufig in einem intermittierenden Modus betrieben. Dies bedeutet ein zyklisches Laufen und Abschalten. Dieser intermittierende Modus wird auf Grund von mechanischen Grenzen der Pumpen unten im Bohrloch gewählt, die nicht bei noch niedrigeren Laufgeschwindigkeiten zuverlässig oder wünschenswert arbeiten.

Die Zeitintervalle dieser Lauf- und Abschaltperioden können optimiert werden. Dies geschieht, indem man sie vom Druck an der Bohrlochsohle abhängig macht. Das vorgeschlagene System kann somit eingesetzt werden, um automatisch die Startzeiten und Abschaltzeiten von Pumpen im Bohrloch einzustellen, und zwar als eine Funktion des Druckes an der Bohrlochsohle.

Auch eine Optimierung von Einschaltzeiten bei einem Testbetrieb von Ölquellen kann erfolgen. Ein Druckübergangszustand beim Testen von Ölquellen wird häufig eingesetzt, um die Eigenschaften des Ölreservoirs besser einschätzen zu können. Dabei ist ein Druckaufbautest ein wichtiger derartiger Testtyp: Nachdem die Quelle für eine bestimmte Zeitdauer gefördert hat, und zwar mit einer konstanten Förderrate, wird ein Druckaufbautest durchgeführt, bei welchem aufgezeichnet wird, wie der Druck an der Bohrlochsohle nach Abschalten der Pumpe reagiert. Meistens werden dabei Druckeinrichtungen unten im Bohrloch eingesetzt, um diesen Druck an der Bohrlochsohle aufzuzeichnen. Wie oben bereits erwähnt ist die Installation von derartigen Messgeräten und Sensoren unten im Bohrloch eine kostspielige Angelegenheit und in vielen Fällen werden Drucksensoren eingesetzt, die den Druck nur aufzeichnen. Ein erheblicher Nachteil von derartigen Sensoren, die nur aufzeichnen, besteht darin, dass die aufgezeichneten Drücke an der Bohrlochsohle nicht in Echtzeit zur Verfügung stehen. Das bedeutet, dass die Abstellperioden oft über einen langen Zeitraum erstreckt werden müssen, um sicherzustellen, dass die Drücke beim Einschalten an der Bohrlochsohle eine Stabilisierung erreichen, bevor das Druckmessgerät wieder aus dem Bohrloch zurückgezogen wird. Das Anwenden des vorgeschlagenen Systems mit der Bestimmung des Druckes an der Bohrlochsohle aus den Messungen der Spiegelteufe in Echtzeit kann die unnötig langen Abstellperioden in solchen Fällen vermeiden. Insbesondere kann dadurch der automatisch entstehende Verlust an Förderzeit und somit an geförderter Menge ebenfalls vermieden werden.

Weiter bevorzugte Vorgehensweisen und Eigenschaften werden in den Unteransprüchen und der nachfolgenden Figurenbeschreibung angegeben.

Folgenden wird anhand der Zeichnung ein Ausführungsbeispiel der Erfindung und die der Erfindung zugrunde liegende Situation in einem Bohrloch näher beschrieben. Es zeigen:
Figur 1 eine schematische Darstellung eines Bohrlochs mit an dem Bohrloch angeordneten Mess- und Auswertungsvorrichtungen; und
Figur 2 eine schematische Darstellung von beispielhaft ermittelten Werten.

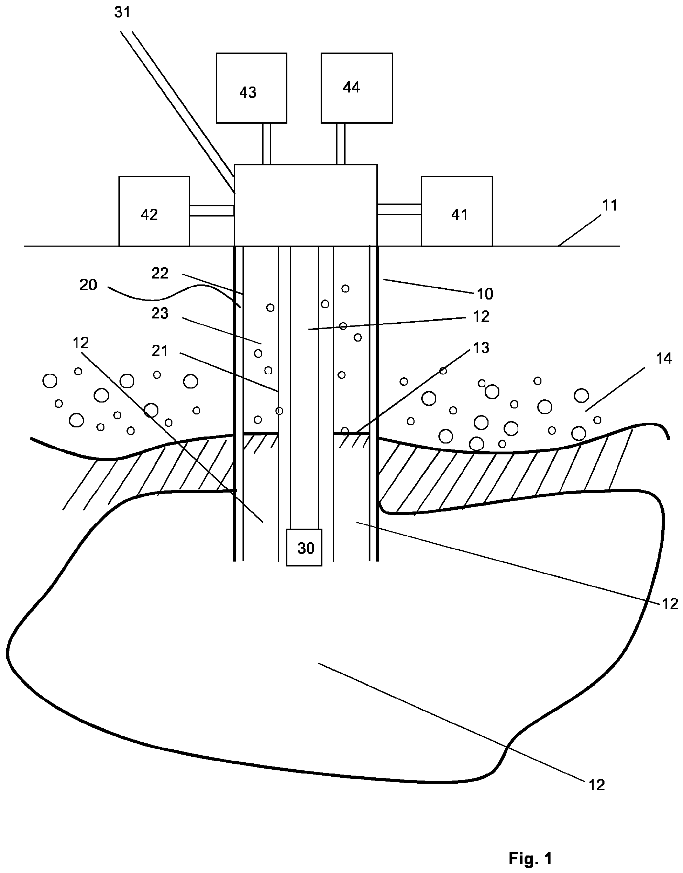

In der Figur 1 ist ein Bohrloch 10 dargestellt. Das Bohrloch 10 reicht von der Erdoberfläche 11 in die Tiefe bis zu einer Lagerstätte für beispielsweise Erdöl bzw. Rohöl 12. Das Rohöl 12 bildet innerhalb des Bohrlochs 10 zusammen mit ggf. Wasser und weiteren Flüssigkeiten ein Gemisch, welches durch eine Grenzschicht 13 von den sich darüber bildenden verschiedenen Gasen und gasförmigen Medien 14 getrennt ist. Diese Gase sind u. a. Stickstoff, Argon und andere Bestandteile der Atmosphäre und außerdem Methan und weitere sich oberhalb des Rohöls 12 bildende Gase. Die Zusammensetzung schwankt im Laufe der Zeit und auch mit der Tiefe des Bohrlochs 10.

Die genaue Lage der Grenzschicht 13 zwischen den flüssigen Stoffen mit dem Rohöl 12 und den gasförmigen Medien 14 bildet eine Spiegelteufe. Die genaue Lage dieser Spiegelteufe 13 bzw. der Grenzschicht oder Flüssigkeitsoberfläche schwankt im Laufe der Zeit abhängig davon, mit welcher Zustromrate das Rohöl 12 und weiteren Flüssigkeiten in das Bohrloch 10 von der Seite und von unten eintreten.

Um das Rohöl 12 aus dem Bohrloch 10 an die Erdoberfläche 11 zu fördern, ist eine Verrohrung oder Rohrleitung 20 vorgesehen. Diese vertikal im Bohrloch 10 verlaufende Rohrleitung 20 besteht aus einem Innenrohr 21 und einem das Innenrohr konzentrisch umgebenden und gleichzeitig die Rohrwandung bildenden Außenrohr 22. Durch das Innenrohr 21 wird das Rohöl 12 nach oben gefördert. Zwischen dem Innenrohr 21 und dem Außenrohr 22 wird ein Ringraum 23 gebildet. In dem Ringraum 23 wird der Druck ausgeglichen. In dem Innenrohr 21 befindet sich also während des Fördervorgangs aufsteigendes Rohöl 12. In dem Ringraum 23 ist unterhalb der Spiegelteufe 13 ebenfalls Rohöl 12, oberhalb befindet sich im wesentlichen Gas, das nach oben aufsteigt.

Unten im Bohrloch 10 ist eine Pumpe 30 dargestellt. Es kann sich beispielsweise um eine elektrische Tauchkreiselpumpe oder eine Gestängetiefpumpe handeln, natürlich handelt es sich unter Umständen auch um mehrere Pumpen, die in verschiedener Höhe und auch in unterschiedlicher Form angeordnet sein können.

Weitere Elemente der Pumpenanlage, die zur schematisch angedeuteten Pumpe 30 gehören, können sich auch oberhalb der Erdoberfläche 11 befinden und dort für den geregelten Abtransport des geförderten Rohöls 12 sorgen, welcher durch das Innenrohr 21 der Rohrleitung 20 nach oben gefördert worden ist.

Diese Elemente oberhalb der Erdoberfläche 11, beispielsweise eine Rohrleitung 31 und weitere Einrichtungen, sind hier nur schematisch dargestellt.

Man sieht darüber hinaus eine Druckmesseinrichtung 41, die den Druck in dem oberhalb der Erdoberfläche 11 befindlichen Kopf des Bohrlochs 10 misst.

Insbesondere befindet sich hier auch eine Vorrichtung 42 zur Erkennung der Lage der Spiegelteufe in dem Bohrloch 10. Eine solche, insbesondere aus der EP 2 169 179 B1 und der US-A-8,902,704 bekannte Vorrichtung arbeitet (nicht dargestellt) mit einer Schwingungsabgabeeinrichtung, die in das Bohrloch nach unten ein Schwingungssignal abgibt. Das Schwingungssignal in Form von Druckwellen wird an der Grenzschicht 13 bzw. an der Spiegelteufe reflektiert und dann in einer Messeinrichtung in der Vorrichtung wieder aufgefangen. Diese Messeinrichtung besitzt einen Druckaufnehmer. Mit einer solchen Vorrichtung können anders als in früheren Konzeptionen hoch präzise Angaben über die exakte Lage der Spiegelteufe bzw. der Oberfläche der Flüssigkeit im Bohrloch 10 und der erwähnten Grenzschicht 13 getroffen werden.

Neben diesen Messeinrichtungen 41, 42 ist hier oberhalb der Erdoberfläche 11 auch eine Steuerung 43 für die Pumpgeschwindigkeit der Pumpe 30 und der weiteren Elemente vorgesehen, wobei hier zwischen den Messeinrichtungen 41, 42 und dieser Steuerung 43 eine entsprechende Verbindung vorliegt.

Weiter ist eine Auswertungseinrichtung 44 vorgesehen. Die Auswertungseinrichtung 44 erhält die Messwerte der Messeinrichtungen 41 und 42 betreffend die Lage der Spiegelteufe 13 im Bohrloch 10 und den Druck im Kopf des Bohrloches 10 und errechnet dadurch Steuerungswerte, die sie an die Steuerung 43 zur Steuerung der Leistung der Pumpe 30 weitergibt.

Die Auswertungseinrichtung 44 arbeitet dabei unter Berücksichtigung der Gleichungen 1 bis 5 wie oben stehend beschrieben. Ihr können auch weitere Daten zugeführt werden und sie erhält auch die Daten, die bei den Förderungstätigkeiten sonst anfallen, also die Fördermengen, Zustromraten, etc.

Die Auswertungseinrichtung 44 kann also die Steuerung 43 so informieren, dass die Lage der Spiegelteufe 13 möglichst konstant bleibt, wenn dieses wie bei vielen Anwendungsfällen gewünscht wird. Es kann auch vermieden werden, dass der Druck in der Flüssigkeit unterhalb der Spiegelteufe 13 unter den Kochpunktdruck fällt, so dass auch die dadurch bestehenden Problemstellungen wie oben stehend erörtert vermieden werden können.

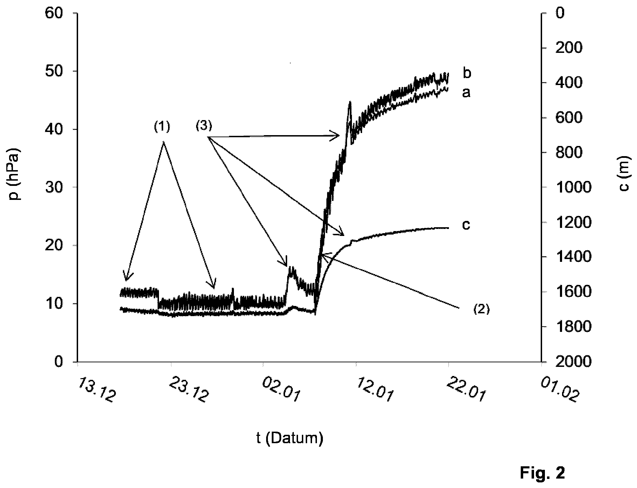

In der Figur 2 ist weiterhin dargestellt, wie sich die verschiedenen physikalischen Werte und Daten verhalten können.

Eingezeichnet ist von links nach rechts eine Zeitskala mit verschiedenen beispielhaft eingesetzten Daten, die in Tagen und Monaten angegeben sind und das Verhalten bestimmter Werte während dieser Tage an einem Bohrloch beschreiben.

Nach oben ist aufgetragen einerseits der Druck in Hektopascal beziehungsweise in Bar, und zwar in jeweils 100kPa entsprechend 1.000 Hektopascal, also aufsteigend von 0 bis 6.000 kPa entsprechend 60.000 Hektopascal.

Auf der rechten Seite ist eine Skala angegeben, die die Lage der Spiegelteufe innerhalb des Bohrlochs in Metern unter der Erdoberfläche angibt.

In dem Diagramm sind nun drei Messwerte aufgetragen, nämlich als Linie a der gemessene Druck, wenn tatsächlich ein Drucksensor im Bohrloch angeordnet wird, wie dies herkömmlich erfolgen muss.

Die Linie b zeigt einen erfindungsgemäß berechneten Wert für den Druck in der Flüssigkeit im Bohrloch.

Die Linie c schließlich zeigt die Lage der Spiegelteufe während der Messzeit, die sich über ungefähr fünf Wochen erstreckt hat.

Während dieser Messungen sind bewusst einige Zustandsänderungen durchgeführt worden, die sich dann auch bei den Messwerten entsprechend wiederspiegeln.

So ist mit (1) ein stabiler oder auch stationärer Zustand beschrieben worden, also eine laufende Förderung.

Unter (2) ist dann ein Übergangszustand herbeigeführt worden und entsprechend dargestellt.

Dabei sieht man bei (3) verschiedene Spitzen, die sich auf Grund von Druckschwankungen in der Rohrleitung oberhalb der Erdoberfläche ergeben haben.

Ein vorteilhaftes Verfahren zum Betrieb einer Förderung eines Fluids in einem Bohrloch, bei welchem in dem Bohrloch 10 bei Tiefbohrungen die Lage einer Spiegelteufe 13 erfasst wird, eine Druckmessung des Druckes am Kopf des Bohrloches 10 vorgenommen wird, aus dem gemessenen Druck am Kopf des Bohrloches 10 und der ermittelten Lage der Spiegelteufe 13 der Druck in der Flüssigkeit unterhalb der Spiegelteufe 13 im Bohrloch 10 bestimmt wird, und die Bestimmung dieses Drucks zur Regelung der Leistung einer Fördereinrichtung 30 für die zu fördernde Flüssigkeit eingesetzt wird, und die Leistung der Fördereinrichtung 30 so geregelt wird, dass konstante Zuflussraten und/oder eine konstante Lage der Spiegelteufe 13 herrschen und der Druck an einer Bohrlochsohle im Bohrloch 10 stets oberhalb des Kochpunktdruckes bzw. Gasentlösungspunktes bzw. Entgasungsbeginns gehalten wird, ergibt sich insbesondere dadurch, dass zusätzlich zur Erkennung der Lage der Spiegelteufe 13 in dem Bohrloch 10 bei Tiefbohrungen an der Erdoberfläche 11 ein akustisches Ereignis gezielt stattfindet, welches akustische Druckwellen erzeugt, dass die von dem Ereignis erzeugten Druckwellen in dem Bohrloch 10 in die Tiefe laufen, dass die in das Bohrloch 10 laufenden Druckwellen zumindest auch an der Spiegelteufe 13 reflektiert werden, dass an der Erdoberflache 11 aus dem Bohrloch 10 dorthin laufende Druckwellen aufgefangen werden und die Laufzeit seit dem akustischen Ereignis gemessen werden, dass die aufgefangenen und gemessenen Druckwellen ausgewertet werden und zusammen mit der zugehörigen Laufzeit auf die Lage der Spiegelteufe 13 geschlossen wird, dass das akustische Ereignis Signalmuster mit einem vorgegebenen, zeitlich veränderlichen Frequenzspektrum erzeugt, dass das Signalmuster als Schwingungsereignis in das Bohrloch 10 abgestrahlt wird, in die Tiefe lauft und reflektiert wird, dass an der Erdoberfläche 11 aus dem Bohrloch 10 stammende aufgefangene Signale analysiert werden, dass aus den aufgefangenen Signalen bei der Analyse Schwingungsereignisse herausgefiltert werden, die zu dem abgestrahlten Signalmuster korrelieren, und dass aus den zu dem abgestrahlten Signalmuster korrelierenden Schwingungsereignissen unter den aufgefangenen Signalen und der Laufzeit seit der Ausstrahlung des Signalmusters auf die Lage der Spiegelteufe 13 geschlossen wird.

### Bezugszeichenliste

- 10: Bohrloch
- 11: Erdoberfläche
- 12: Rohöl
- 13: Grenzschicht
- 14: gasförmige Medien

- 20: Rohrleitung
- 21: Innenrohr
- 22: Außenrohr
- 23: Ringraum

- 30: Pumpe
- 31: Rohrleitung oberhalb der Erdoberfläche 11

- 41: Druckmesseinrichtung
- 42: Vorrichtung zur Erkennung der Spiegelteufe
- 43: Steuerung der Pumpe 30
- 44: Auswertungseinrichtung

- P: Dichte
- q: Zuflussrate
- B_{g}: Volumenfaktor der Gasformation
- f_{g}: Gasblasenanteil
- GOR: Verhältnis von Gas zu Öl
- IPR: Beziehung der Zuflussleistung
- ID: innerer Durchmesser
- OD: äußerer Durchmesser
- Pᵣ: Druck des Reservoirs

- P_{wf}: Fließdruck an der Bohrlochsohle
- σ: Grenzflächenspannung
- v_{sg}: Leerrohrgasgeschwindigkeit
- A: Fläche
- CA: Außenrohr (Casing)
- TU: Innenrohr (Tubing)

## Patentansprüche

1. Verfahren zum Betrieb einer Förderung eines Fluids in einem Bohrloch, bei welchem in dem Bohrloch (10) bei Tiefbohrungen die Lage einer Spiegelteufe (13) erfasst wird, eine Druckmessung des Druckes am Kopf des Bohrloches (10) vorgenommen wird, aus dem gemessenen Druck am Kopf des Bohrloches (10) und der ermittelten Lage der Spiegelteufe (13) der Druck in der Flüssigkeit unterhalb der Spiegelteufe (13) im Bohrloch (10) bestimmt wird, und die Bestimmung dieses Drucks zur Regelung der Pumpleistung einer Fördereinrichtung (30) für die zu fördernde Flüssigkeit eingesetzt wird, wobei die Pumpleistung der Fördereinrichtung (30) so geregelt wird, dass konstante Zuflussraten und/oder eine konstante Lage der Spiegelteufe (13) herrschen, **dadurch gekennzeichnet, dass** die Bestimmung des Druckes an einer Bohrlochsohle zur Regelung so eingesetzt wird, dass der Druck stets oberhalb des Kochpunktdruckes bzw. Gasentlösungspunktes bzw. Entgasungsbeginns gehalten wird.

2. Anordnung zur Durchführung des Verfahrens nach Anspruch 1, wobei die Anordnung eine Druckmesseinrichtung (41) oberhalb der Erdoberfläche (11) zur Messung des Druckes im Kopf des Bohrloches (10), eine Vorrichtung (42) zur Erkennung der Lage der Spiegelteufe (13) und eine Auswerteeinrichtung (44), der die Werte der Druckmesseinrichtung (41) und der Vorrichtung (42) zur Erkennung der Lage der Spiegelteufe (13) zugeführt werden, beinhaltet, wobei eine Steuerung (43) der Fördereinrichtung (30) vorgesehen ist, die die Pumpleistung der Fördereinrichtung (30) so regelt, dass konstante Zuflussraten und/oder eine konstante Lage der Spiegelteufe(13) herrscht, **dadurch gekennzeichnet, dass** die Bestimmung des Druckes an einer Bohrlochsohle zur Regelung so einsetzt, dass der Druck stets oberhalb des Kochpunktdruckes bzw. Gasentlösungspunktes bzw. Entgasungsbeginns gehalten wird, und , dass die Auswerteeinrichtung (44) der Steuerung (43) der Fördereinrichtung (30) aus den Eingabedaten ermittelte Werte zuführt.

## Claims

1. Method for operating a process for the extraction of a fluid in a borehole, in which the location of an interface depth (13) is detected in the borehole (10) during deep drilling, a pressure measurement of the pressure at the head of the borehole (10) is made, the pressure in the fluid below the interface depth (13) in the borehole (10) is determined from the measured pressure at the head of the borehole (10) and the determined location of the interface depth (13),and the determination of this pressure is utilized for regulating the pumping power of an extracting device (30) for the fluid to be extracted, wherein the pumping power of the extracting device (30) is regulated in such a way that constant inflow rates and/or a constant location of the interface depth (13) prevail, **characterized in that** the determination of the pressure at a bottom of the borehole is used in such a way that the pressure is always kept above the boiling point pressure or gas release point or the start of degassing.

2. Arrangement for carrying out the method according to claim 1, the arrangement comprising a pressure measuring device (41) above the earth's surface (11) for measuring the pressure in the head of the borehole (10), a device (42) for detecting the location of the interface depth (13) and an evaluation device (44), to which the values of the pressure measuring device (41) and the device (42) for detecting the location of the interface depth (13) are fed, wherein a controller (43) of the extraction device is provided, which regulates the pumping power of the extraction device (30) in such a way that constant inflow rates and/or a constant location of the interface depth (13) prevail, **characterized in that** the determination of the pressure at a bottom of the borehole is used in such a way that the pressure always remains above the boiling point pressure or the gas bubble point or the begin of degassing, and **in that** the evaluation device (44) supplies values determined from the input data to the control (43) of the extraction device (30).

## Revendications

1. Procédé pour faire fonctionner un transport d'un fluide dans un trou de forage, dans lequel
la position d'un niveau de puits (13) est détectée dans le trou de forage (10) lors de forages profonds, une mesure de pression de la pression est effectuée, à la tête du trou de forage (10), a partir de la pression mesurée à la tête du trou de forage (10) et de la position déterminée du niveau du puits (13), la pression dans le liquide en dessous du niveau du puits (13) dans le trou de forage (10) est déterminée, et la
détermination de cette pression est utilisée pour réguler la puissance de pompage d'un dispositif de transport (30) du liquide à transporter, la puissance de pompage du dispositif de transport (30) étant régulée de telle sorte qu'on a des débits d'alimentation constants et/ou une position constante du niveau du puits (13), **caractérisé en ce que** la détermination de la pression au niveau d'un fond du trou de forage est utilisée pour la régulation de manière à ce que la pression soit toujours maintenue au-dessus de la pression du point d'ébullition ou du point de dégazage ou du début de dégazage.

2. Dispositif pour la mise en œuvre du procédé selon la revendication 1, le dispositif comprenant un dispositif de mesure de pression (41) au-dessus de la surface terrestre (11) pour mesurer la pression dans la tête du trou de forage (10), un dispositif (42) pour détecter la position du niveau du puits (13) et un dispositif d'évaluation (44) auquel sont amenées les valeurs du dispositif de mesure de pression (41) et du dispositif (42) pour détecter la position du niveau du puits (13), une commande (43) du dispositif de transport (30) étant prévue qui régule la puissance de pompage du dispositif de transport (30) de telle sorte qu'on a des débits d'alimentation constants et/ou une position constante du niveau du puits (13), **caractérisé en ce que** la détermination de la pression au fond du trou de forage pour la régulation commence de telle sorte que la pression soit toujours maintenue au-dessus de la pression du point d'ébullition ou du point de dégazage ou du début de dégazage, et que le dispositif d'évaluation (44) amène à la commande (43) du dispositif de transport (30) des valeurs déterminées à partir des données d'entrée.
